# EUROPÄISCHE PATENTANMELDUNG

(11) **EP 2 133 312 A1**
(43) Veröffentlichungstag der Anmeldung: **16.12.2009**
(21) Anmeldenummer: 09162432.0
(22) Anmeldetag: 10.06.2009
(51) Int. Cl.: C02F 3/10

(54) **Biofilm-Trägerelement, Verwendung derartiger Trägerelemente zur Reinigung von Wasser und Filter mit derartigen Trägerelementen**

(30) Priorität: 11.06.2008 DE 102008027789
(71) Anmelder: Fränkische Rohrwerke Gebr. Kirchner GmbH & Co., 97486 Königsberg/Bayern (DE)
(72) Erfinder: Büttner, Matthias, 96106 Ebern (DE)
(74) Vertreter: Herzog, Markus

(57) **Zusammenfassung**

Ein rohrförmiges Trägerelement (10), auf dessen Oberfläche ein Biofilm zum Reinigen von verschmutztem Wasser wächst, ist erfindungsgemäß als Wellrohr (10) ausgebildet. Eine Mehrzahl derartiger Biofilm-Trägerelemente (10) kann erfindungsgemäß zum Reinigen von verschmutztem Wasser verwendet werden, insbesondere auf dem Gebiet der Aquaristik, dem Gebiet der Fischzucht oder in einer Kläranlage. Hierzu kann erfindungsgemäß ferner ein Filter eingesetzt werden, in dessen Filtervolumen eine Mehrzahl erfindungsgemäßer Biofilm-Trägerelemente (10) in loser Schüttung aufgenommen ist.

## Beschreibung

Die Erfindung betrifft ein rohrförmiges Trägerelement, auf dessen Oberfläche ein Biofilm zum Reinigen von verschmutztem Wasser wächst.

Zum Reinigen von verschmutztem Wasser sind eine ganze Reihe verschiedener Verfahren bekannt. Unter anderem werden auch Bakterienkulturen zur biologischen Reinigung von Wasser eingesetzt. Diese Bakterienkulturen bilden einen Biofilm, der auf der Oberfläche rohrförmiger Trägerelemente wächst. In Abhängigkeit des jeweils gewünschten Reinigungsprozesses können aerobe, anaerobe oder anoxische Bakterien eingesetzt werden. Bei der Reinigung strömt das zu reinigende Wasser an den mit Biofilm bewachsenen inneren und äußeren Oberflächen des rohrförmigen Trägerelements entlang, sodass die Bakterien in dem Biofilm ihre reinigende Wirkung entfalten können. Die Strömung des Wassers kann dabei eine natürliche Strömung sein oder sie kann von einer Pumpe oder einem Agitator, beispielsweise einem Propeller, hervorgerufen werden. Filter, die eine lose Schüttung derartiger rohrförmiger Trägerelemente beinhalten, sind beispielsweise aus der Aquaristik bekannt.

Es braucht nicht betont zu werden, dass die reinigende Wirkung der rohrförmigen Trägerelemente umso größer ist, je größer die auf die Volumeneinheit der Schüttung bezogene Oberfläche ist, die mit einem Biofilm bedeckt ist. Zur Erzielung einer möglichst großen Oberfläche ist aus der gattungsbildenden EP 0 595 314 B2 ein profilextrudiertes Trägerelement bekannt. Dieses profilextrudierte Trägerelement weist eine rohrförmige Umfangswandung auf, wobei der von dieser Umfangswandung umschlossene Innenraum durch Trennwandungen weiter unterteilt ist. Aufgrund seiner Herstellung im Profilextrusionsverfahren weist das bekannte Trägerelement über seine gesamte, in Richtung der Rohrachse gemessene Länge eine konstante Querschnittsfläche auf. Aufgrund dieser Gestaltung ist lediglich die der Extrusionsrichtung entsprechende Rohrachse eine Richtung hoher Formstabilität, während das bekannte Trägerelement in Richtung der beiden zur Rohrachse orthogonal verlaufenden Richtungen eine relativ geringe Formstabilität aufweist. Da es in der Praxis zu relativ hohen Schüttungen derartiger Biofilm-Trägerelement kommen kann, müssen die Wandungen des bekannten Trägerelements relativ dick ausgeführt sein, um die erforderliche Formstabilität gewährleisten zu können. Dies ist mit einem entsprechend hohen Materialaufwand verbunden und hat somit hohe Herstellungskosten zur Folge.

Demgegenüber ist es Aufgabe der vorliegenden Erfindung, ein rohrförmiges Trägerelement der eingangs genannten Art anzugeben, welches über eine höhere Formstabilität verfügt.

Diese Aufgabe wird erfindungsgemäß durch ein rohrförmiges Trägerelement der eingangs genannten Art gelöst, welches als Wellrohr ausgebildet ist. Auf Grund der Gestaltung als Wellrohr verfügt das erfindungsgemäße Trägerelement über zwei zueinander orthogonal verlaufende Richtungen hoher Formstabilität, nämlich die orthogonal zur Achse des Wellrohrs verlaufenden Richtungen, und lediglich über eine Richtung niedriger Formstabilität, nämlich die Richtung der Wellrohrachse. Eine Folge der höheren Formstabilität ist es, dass die Wandungen des Trägerelements dünner ausgeführt sein können, was die Herstellungskosten für das erfindungsgemäße Trägerelement entsprechend reduziert. Auch hinsichtlich der Bereitstellung einer möglichst größen Oberfläche für den Bewuchs mit Biofilm geht das erfindungsgemäße Trägerelement einen anderen Weg als das bekannte Trägerelement. Und zwar wird der weitaus größte Teil der für den Bewuchs geeigneten Oberfläche von orthogonal zur Rohrachse verlaufenden Flächenabschnitten gebildet, nämlich den die Wellenberge und die Wellentäler des Wellrohrs bildenden Flankenflächen. Dies scheint auf den ersten Blick nachteilig zu sein, da ja das zu reinigende Wasser an diesen Oberflächen entlangströmen muss, um mit dem reinigenden Biofilm in Kontakt zu kommen, und das Wasser das Trägerelement ja in Richtung der Rohrachse durchströmt. Überraschenderweise hat es sich aber gezeigt, dass die Durchströmung einer losen Schüttung von erfindungsgemäßen Trägerelementen ausreichend turbulent verläuft, um auf Grund von Verwirbelungen sicherzustellen, dass auch der Biofilm, der sich in den von den Wellungen des Wellrohrs gebildeten Seitenkammern des Trägerelements befindet, stets in ausreichendem Maße von Wasser umströmt wird.

Um das Durchströmen des erfindungsgemäßen Trägerelements mit zu reinigendem Wasser erleichtern zu können, wird in Weiterbildung der Erfindung vorgeschlagen, dass der von dem Wellrohr umschlossene Innenraum eine einzige Kammer umfasst. Dadurch kann sich die turbulente Strömung im Innenraum des Trägerelements ungehindert ausbreiten, so dass der Biofilm, der sich auf den inneren Begrenzungswänden des Wellrohrs gebildet hat, besser umspült wird und seine Reinigungswirkung besser entfalten kann.

Da die Verwirbelungen der turbulenten Strömung umso leichter in die von den Wellungen des Wellrohrs gebildeten Seitenkammern des Trägerelements gelangen können, je geringer die Tiefe dieser Seitenkammern ist, und das Umspülen des Biofilms unmittelbare Auswirkungen auf die Effektivität der Reinigung hat, besteht einerseits der Wunsch, dass der kleinste Innendurchmesser des Wellrohrs einen Wert aufweist, der möglichst nahe am Wert des größten Außendurchmessers des Wellrohrs liegt. Andererseits ist die Oberfläche, die für den Bewuchs mit Biofilm zur Verfügung steht, und damit die zur Reinigung des Wassers zur Verfügung stehende Menge an Biofilm umso größer, je kleiner der Wert des kleinsten Innendurchmessers im Vergleich mit dem Wert des größten Außendurchmessers des Wellrohrs liegt. Als Kompromiss zwischen diesen beiden einander widerstrebenden Forderungen wird in Weiterbildung der Erfindung vorgeschlagen, dass der Wert seines kleinsten Innendurchmessers mindestens das 0,5-fache, höchstens jedoch das 0,75-fache des Werts seines größten Außendurchmessers beträgt.

Da das erfindungsgemäße Trägerelement aufgrund seiner Ausbildung als Wellrohr eine hohe Formstabilität besitzt, reicht es, wenn der Wert seiner Wandstärke zwischen etwa 0,10 mm und etwa 0,30 mm beträgt.

Um eine möglichst große Oberfläche für den Bewuchs mit Biofilm bereitstellen zu können, kann ferner vorgesehen sein, dass das Trägerelement auf seiner Länge wenigstens drei, vorzugsweise wenigstens fünf Wellenlängen der Wellung aufweist.

Um eine universelle Einsetzbarkeit des erfindungsgemäßen Trägerelements bei allen bekannten Reinigungsanordnungen, bei denen auch bislang schon rohrförmige Trägerelemente zum Einsatz kamen, ermöglichen zu können, ist es bevorzugt, wenn die Länge des Trägerelements 10 mm nicht übersteigt oder/und seine Querschnittsfläche 100 mm² nicht übersteigt.

Je nach Anwendung können unterschiedliche Querschnittsgestalten des Trägerelements vorteilhaft sein. Steht die Bereitstellung einer möglichst großen Oberfläche zum Bewuchs mit Biofilm im Vordergrund, so kann der Querschnitt des Trägerelements die Form eines Quadrats oder Rechtecks mit abgerundeten Ecken aufweisen. Steht hingegen die Formstabilität im Vordergrund, so kann das Trägerelement einen kreisförmigen Querschnitt aufweisen.

Im Falle eines Trägerelements mit nicht-kreisförmigem Querschnitt gelten die vorstehend getätigten Aussagen zu Durchmesserwerten jeweils auf einen effektiven Durchmesser, nämlich den Durchmesser eines fiktiven Trägerelements mit kreisförmigem Querschnitt, dessen Querschnittsfläche den gleichen Wert aufweist wie das Trägerelement mit nicht-kreisförmigem Querschnitt.

Als Materialien für das erfindungsgemäße Trägerelement eignen sich insbesondere Polypropylen (PP) oder/und hochdichtes Polyethylen (HDPE) oder/und niederdichtes Polyethylen (LDPE).

Nach weiteren Gesichtspunkten betrifft die Erfindung ferner die Verwendung einer Mehrzahl von erfindungsgemäßen Biofilm-Trägerelementen zum Reinigen von verschmutztem Wasser, insbesondere auf dem Gebiet der Aquaristik, dem Gebiet der Fischzucht oder in einer Kläranlage, sowie einen Filter zum Reinigen von verschmutztem Wasser, umfassend ein ein Filtervolumen umgrenzendes Gehäuse, welches wenigstens einen Zulauf für verschmutztes Wasser und wenigstens einen Ablauf für gereinigtes Wasser umfasst, wobei in dem Filtervolumen eine Mehrzahl von lose geschütteten, erfindungsgemäßen Biofilm-Trägerelementen aufgenommen ist.

Die Erfindung wird im Folgenden an zwei Ausführungsbeispielen anhand der beigefügten Zeichnung näher erläutert werden Es stellt dar:
- Figur 1: eine perspektivische Ansicht einer ersten Ausführungsform eines erfindungsgemäßen Trägerelements;
- Figur 2: eine Seitenansicht des Trägerelements gemäß Fig. 1 aus Richtung des Pfeils A in Fig. 1;
- Figur 3: eine Stirnansicht des Trägerelements gemäß Fig. 1 aus Richtung des Pfeils B in Fig. 1;
- Figuren 4 und 5: Ansichten ähnlich Fig. 2 und 3 einer zweiten Ausführungsform eines erfindungsgemäßen Trägerelements;
- Figur 6:: eine Schnittdarstellung des Details VI in Fig. 4; und
- Figur 7: eine grobschematische Darstellung eines eine Mehrzahl erfindungsgemäßer Trägerelemente beinhaltenden Filters.

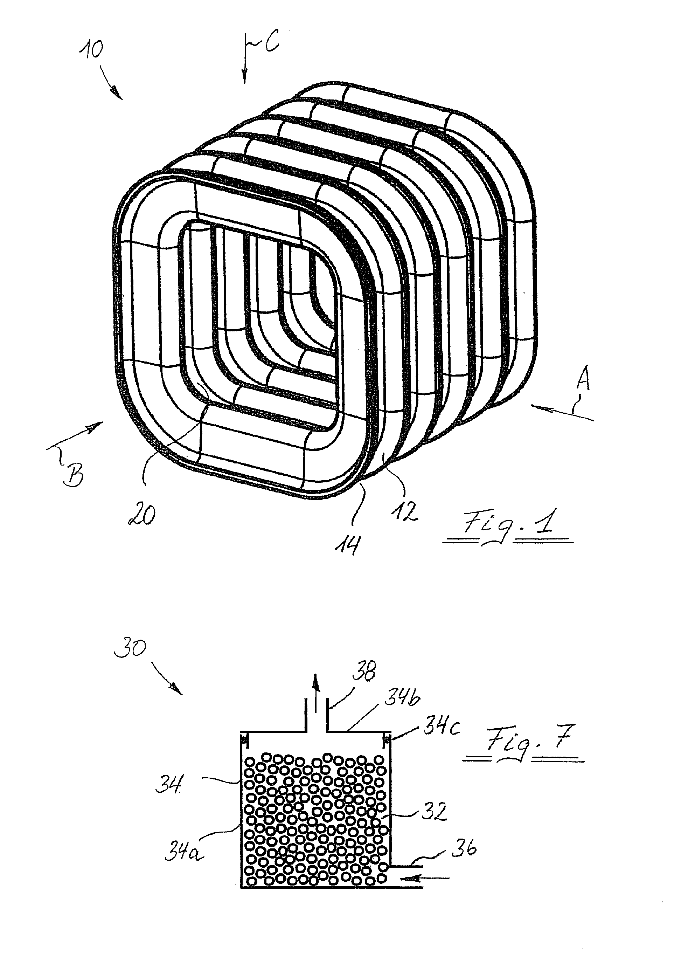

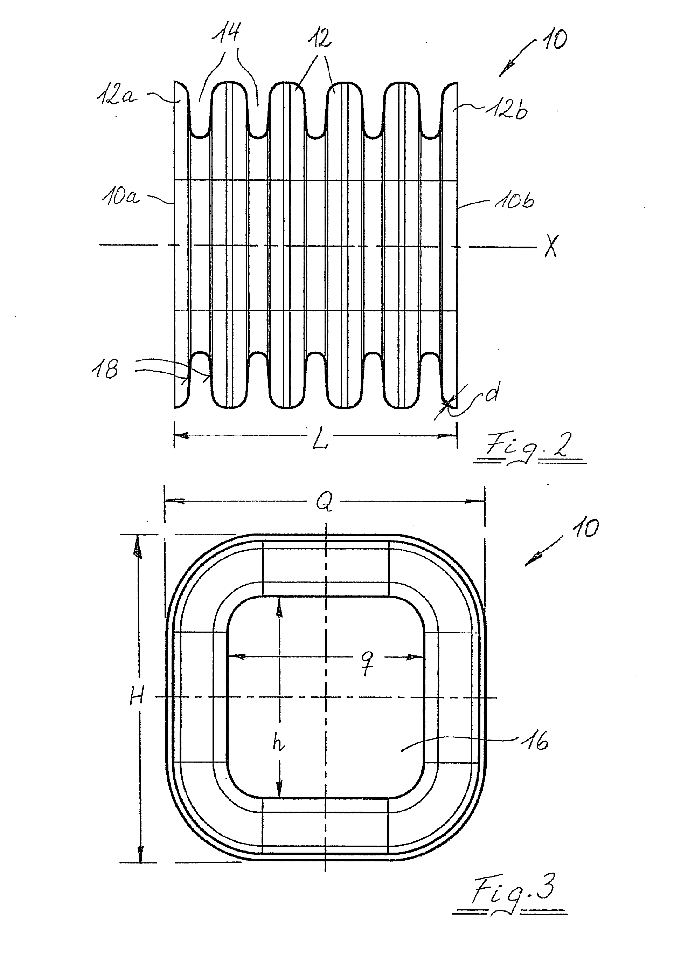

In Fig. 1 ist eine erste Ausführungsform eines erfindungsgemäßen Biofilm-Trägerelements allgemein mit 10 bezeichnet. Das Biofilm-Trägerelement 10 ist als Wellrohr ausgebildet und umfasst im dargestellten Ausführungsbeispiel (siehe auch Fig. 2) fünf Wellenberge 12 und fünf Wellentäler 14, welche alternierend aufeinander folgend angeordnet sind. In dem dargestellten Ausführungsbeispiel sind an den beiden Längsenden 10a und 10b des Trägerelements 10 jeweils ein halber Wellenberg 12a bzw. 12b vorgesehen. Der Abschluss des Trägerelements 10 könnte jedoch genauso gut von zwei halben Wellentälern gebildet sein.

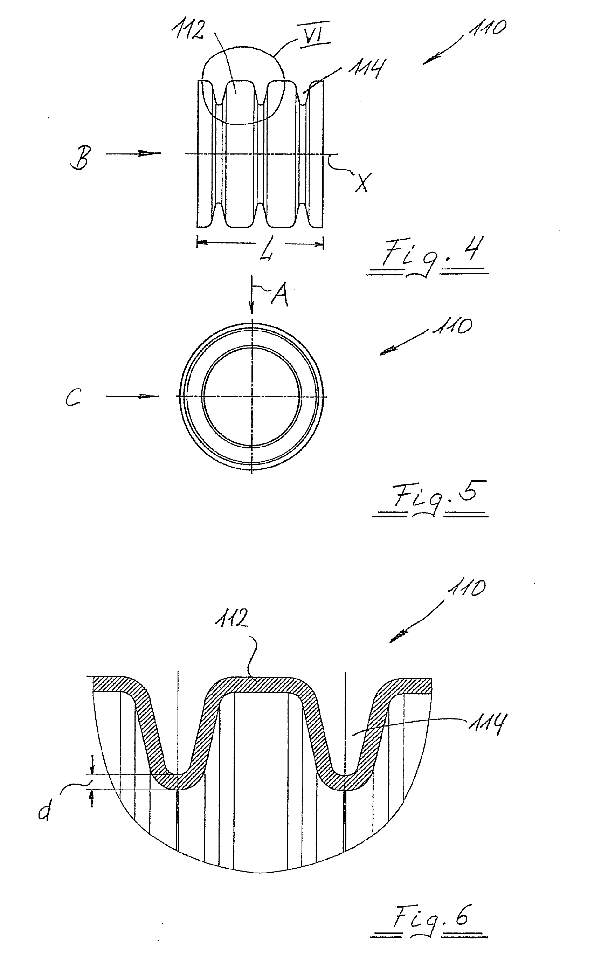

Wie in Fig. 3 dargestellt ist, weist das Trägerelement 10 eine Querschnittsgestalt auf, die die Form eines Quadrats mit abgerundeten Ecken aufweist. Auf diese Weise lässt sich die für den Bewuchs mit einem Biofilm, d.h. Bakterienkulturen, zur Verfügung stehende Oberfläche des Trägerelements 10 im Vergleich mit einer Ausführungsform mit kreisrundem Querschnitt, wie sie nachfolgend mit Bezug auf die Figuren 4 bis 6 noch beschrieben werden wird, vergrößern.

In dem in Figuren 1 bis 3 dargestellten Ausführungsbeispiel ist das Biofilm-Trägerelement 10 im Wesentlichen kubisch ausgebildet, d.h. es verfügt über eine Längsabmessung L (siehe Fig. 2), eine Höhenabmessung H (siehe Fig. 3) und eine Querabmessung Q (siehe Fig. 3), die jeweils etwa 10 mm betragen. Ferner beträgt die lichte Weite h bzw. q des Trägerelements 10 etwa 6 mm. Hierdurch kann sichergestellt werden, dass zum einen das Lumen 16 des Trägerelements 10 weit genug ist, um ein ordnungsgemäßes Durchströmen auch des Innenraums des Trägerelements 10 zu gewährleisten, dass aber andererseits die inneren und äußeren Flankenflächen 18 zwischen den Wellenbergen 12 und den Wellentälern 14 auch groß genug sind, um einer ausreichenden Menge an Biofilm Platz zu gewähren, um das das Lumen 16 durchströmende Wasser auch tatsächlich reinigen zu können.

Ferner ist zu berücksichtigen, dass die Anzahl der Flankenflächen 18 umso größer ist, je größer die Anzahl der Wellenberge 12 und der Wellentäler 14 ist, die auf der Länge L des Trägerelements 10 ausgebildet sind. Je größer aber die Anzahl der Wellenberge 12 und Wellentäler 14 ist, desto enger sind zum einen die vom Lumen 16 abgehenden Seitenkammern 20, in denen ein Großteil des Biofilms angeordnet ist. Je enger aber die Kammern sind, desto schwerer ist es, den Biofilm in einem für die ordnungsgemäße Reinigung des Wassers ausreichenden Maße zu umspülen. Zum anderen ist aber auch die Formstabilität des Trägerelements 10 in seiner Längsrichtung B, d.h. in Richtung der Rohrachse X umso geringer, je größer die Anzahl der Wellenberge 12 und Wellentäler 14 ist, da diese - wie bei einem Wellrohr üblich und auch beabsichtigt - das Wellrohr flexibilisieren. Die Anzahl der Wellenberge 12 und Wellentäler 14 kann daher nicht beliebig erhöht werden. In der Praxis hat sich bei einer Wanddicke d des Trägerelements 10 von zwischen etwa 0,1 mm und etwa 0,3 mm eine Anzahl von fünf Wellenbergen 12 und fünf Wellentälern 14 als geeignet erwiesen, d.h. im Ausführungsbeispiel gemäß Figuren 1 bis 3 eine Wellenlänge von etwa 2 mm.

Bei dem in den Fig. 1 bis 3 dargestellten Ausführungsbeispiel beträgt die komplette Oberfläche des Trägerelements 10, d.h. die Summe von dessen innerer Oberfläche und äußerer Oberfläche etwa 1300 mm², d.h. etwa 13 cm², und dies im Volumen eines Kubus mit 1 cm Kantenlänge.

In den Fig. 4 bis 6 ist eine weitere Ausführungsform eines erfindungsgemäßen Trägerelements dargestellt, das in seinem grundlegenden Aufbau dem Trägerelement 10 gemäß Fig. 1 bis 3 entspricht. Daher sind in den Fig. 4 bis 6 analoge Teile mit den gleichen Bezugszeichen versehen wie in den Fig. 1 bis 3, jedoch vermehrt um die Zahl 100. Darüber hinaus wird das Trägerelement 110 gemäß Fig. 4 bis 6 im Folgenden nur insoweit beschrieben werden, als es sich vom Trägerelement 10 gemäß Fig. 1 bis 3 unterscheidet.

Das Trägerelement 110 gemäß den Fig. 4 bis 6 unterscheidet sich vom Trägerelement gemäß den Fig. 1 bis 3 hauptsächlich in zwei Details, die jedoch beide das gleiche Ziel verfolgen, nämlich die Erhöhung der Formstabilität. Und zwar verfügt das Trägerelement 10, wie in Fig. 5 dargestellt, zum einen über einen kreisförmigen Querschnitt, und zum anderen weist es auf der Länge L, die ebenfalls etwa 10 mm beträgt, lediglich drei Wellenberge 112 und drei Wellentäler 114 auf.

Das Trägerelement 110 verfügt damit zwar im Vergleich zu dem Trägerelement 10 über eine geringere Oberfläche, die zum Bewuchs mit Biofilm zur Verfügung steht. Andererseits weist es aber sowohl in Richtung B der Rohrachse X als auch in den beiden hierzu orthogonal verlaufenden Richtungen A und C eine größere Formstabilität auf. Es eignet sich damit insbesondere für Anwendungsfälle, bei denen es auf Formstabilität ankommt, beispielsweise aufgrund einer sehr großen Schüttungshöhe derartiger Trägerelemente 110.

Hinsichtlich der zum Bewuchs mit Biofilm insgesamt zur Verfügung stehenden Oberfläche ist ferner zu berücksichtigen, dass die Schüttungsdichte der Trägerelemente 110 aufgrund ihres kreisförmigen Querschnitts größer ist als die Schüttungsdichte der Trägerelemente 10 mit ihrem quadratischen Querschnitt, was zumindest einen Teil der vorstehend beschriebenen Oberflächenverringerung wieder kompensiert. Die höhere Formstabilität des Trägerelements 110 kann aber auch dazu benutzt werden, das Trägerelement 110 mit geringerer Wandstärke d auszuführen, was zu Einsparungen bei dem zur Herstellung aufzubringenden Material und damit zu Kosteneinsparungen führt.

Wie vorstehend bereits mehrfach erwähnt wurde, können die erfindungsgemäßen Biofilm-Trägerelemente 10 bzw. 110 zur Reinigung von verschmutztem Wasser verwendet werden. Hierzu kann, wie dies beispielsweise von Aquarium-Filtern her an sich bekannt ist, eine Mehrzahl derartiger Trägerelemente 10 bzw. 110 in loser Schüttung in einem Filter 30 aufgenommen sein, genauer gesagt im Innenvolumen 32 eines Gehäuses 34 des Filters 30. Über einen Zulauf 36 wird am unteren Ende des Gehäuses 34 verschmutztes Wasser in den Filter 30 eingeleitet, und über einen Ablauf 38 wird am oberen Ende des Gehäuses 34 gereinigtes Wasser wieder aus dem Filter ausgeleitet.

Das Gehäuse 34 umfasst ferner einen Hauptkörper 34a und einen Deckel 34b, die mittels eines Dichtungselements 34c, beispielsweise eines O-Rings, dichtend, aber lösbar miteinander verbunden werden können, um die Trägerelemente 10 bzw. 110 von Zeit zu Zeit spülen zu können.

## Patentansprüche

1. Rohrförmiges Trägerelement (10; 110), auf dessen Oberfläche ein Biofilm zum Reinigen von verschmutztem Wasser wächst,
**dadurch gekennzeichnet, dass** es als Wellrohr (10; 110) ausgebildet ist.

2. Trägerelement nach Anspruch 1,
**dadurch gekennzeichnet, dass** der von dem Wellrohr (10; 110) umschlossene Innenraum (16) eine einzige Kammer umfasst.

3. Trägerelement nach Anspruch 1 oder 2,
**dadurch gekennzeichnet, dass** der Wert seines kleinsten Innendurchmessers (h,q) mindestens das 0,5-fache, höchstens jedoch das 0,75-fache des Werts seines größten Außendurchmessers (H, Q) beträgt.

4. Trägerelement nach einem der Ansprüche 1 bis 3,
**dadurch gekennzeichnet, dass** der Wert seiner Wandstärke (d) zwischen etwa 0,10 mm und etwa 0,30 mm beträgt.

5. Trägerelement nach einem der Ansprüche 1 bis 4,
**dadurch gekennzeichnet, dass** es auf seiner Länge (L) wenigstens drei, vorzugsweise wenigstens fünf Wellenlängen der Wellung (12, 14) aufweist.

6. Trägerelement nach einem der Ansprüche 1 bis 5,
**dadurch gekennzeichnet, dass** seine Länge (L) 10 mm nicht übersteigt.

7. Trägerelement nach einem der Ansprüche 1 bis 6,
**dadurch gekennzeichnet, dass** seine Querschnittsfläche (H*Q) 100 mm² nicht übersteigt.

8. Trägerelement nach einem der Ansprüche 1 bis 7,
**dadurch gekennzeichnet, dass** sein Querschnitt die Form eines Quadrats oder Rechtecks mit abgerundeten Ecken aufweist (Figur 3).

9. Trägerelement nach einem der Ansprüche 1 bis 7,
**dadurch gekennzeichnet, dass** es einen kreisförmigen Querschnitt aufweist (Figur 5).

10. Trägerelement nach einem der Ansprüche 1 bis 9,
**dadurch gekennzeichnet, dass** es aus Polypropylen oder/und hochdichtem Polyethylen oder/und niederdichtem Polyethylen gefertigt ist.

11. Verwendung einer Mehrzahl von Biofilm-Trägerelementen (10; 110) nach einem der Ansprüche 1 bis 10 zum Reinigen von verschmutztem Wasser, insbesondere auf dem Gebiet der Aquaristik, dem Gebiet der Fischzucht oder in einer Kläranlage.

12. Filter (30) zum Reinigen von verschmutztem Wasser, umfassend ein ein Filtervolumen (32) umgrenzendes Gehäuse (34), welches wenigstens einen Zulauf (36) für verschmutztes Wasser und wenigstens einen Ablauf (38) für gereinigtes Wasser umfasst, wobei in dem Filtervolumen (32) eine Mehrzahl von lose geschütteten Biofilm-Trägerelementen (10; 110) nach einem der Ansprüche 1 bis 10 aufgenommen ist.
